# EUROPEAN PATENT SPECIFICATION

(11) **EP 4 492 922 B1**
(45) Date of publication and mention of the grant of the patent: **22.04.2026**
(21) Application number: 24186413.1
(22) Date of filing: 04.07.2024
(51) Int. Cl.: H05B 47/125

(54) **METHOD AND SYSTEM TO ILLUMINATE AN ENVIRONMENT**
VERFAHREN UND SYSTEM ZUR BELEUCHTUNG EINER UMGEBUNG
PROCÉDÉ ET SYSTÈME D'ÉCLAIRAGE D'UN ENVIRONNEMENT

(30) Priority: 10.07.2023 EP 23184366
(43) Date of publication of application: 15.01.2025
(73) Proprietor: Signify Holding B.V., 5656 AE Eindhoven (NL)
(72) Inventor: VAN DE SLUIS, Bartel, Marinus, 5656 AE Eindhoven (NL); KRIJN, Marcellinus, Petrus, Carolus, Michael, 5656 AE Eindhoven (NL); ROZENDAAL, Leendert, Teunis, 5656 AE Eindhoven (NL); BURKE, Oliver, Francis, 5656 AE Eindhoven (NL)
(74) Representative: Maes, Jérôme Eduard

(56) References cited:
- EP-B1- 3 437 438
- CN-A- 104 144 537
- US-B2- 8 798 316

## Description

### FIELD OF THE INVENTION

The present disclosure relates to a method of illuminating an environment, a corresponding system, and also a computer program product enabling a computer system to perform such a method.

### BACKGROUND OF THE INVENTION

Methods and systems to illuminate and environment are generally known. As potential environments, in which the present disclosure is or may be applicable, exemplary reference is made here to a building like a distribution center, an office space, a train station. Therein, a subject like a person, a cart, a fork lift truck and the like may be present. Past attempts at energy saving were based on subject detection, and switching lighting devices on only if a subject was detected in the environment. It is not energy efficient to illuminate the entire environment, if only a limited number of subjects are present. In particular, but as an example, only a few subjects may be present in an office space in late afternoon or in a train station late at night. Also, prior techniques are known to switch lighting devices on in a room, when a subject enters the room and is detected to be present in the relatively small room. For larger environments, to date, the same strategy is followed. The present disclosure proposes a local illumination strategy.

USE 798 316 B2 defines a system for controlling a light ambience which is able to take into account the position of a person in a room.

### SUMMARY OF THE INVENTION

It is an object of the present disclosure to provide illumination of an environment with enhanced energy savings by introducing local illumination, requiring a position and/or orientation of the subject to be estimated and focusing illumination on the estimated position and/or orientation. However, the herein proposed illuminating strategy is directed at further optimizing energy savings, by introducing compensation for inaccuracies of estimating a subject's location and orientation or direction.

To this end, a method of illuminating an environment is provided, where the environment covers an area in which a plurality of lighting devices are dispersed and arranged at predetermined positions, with the method comprising:
- estimating a position and/or orientation of a subject within the area;
- controlling a selection of the plurality of lighting devices to illuminate a partial area, based on the estimated position and/or orientation of the subject within the area;
- determining a level of accuracy of the estimated position and/or orientation of the subject; and
- controlling a complementary selection of the plurality of lighting devices to illuminate a complementary partial area, depending on the determined level of accuracy of the estimated position and/or orientation of the subject.

An estimation of a subject's position and/or orientation may comprise several inaccuracies. For example, if estimation of a subject's location is image based, inaccuracy is increased with the distance between an image capturing device and the subject. In a further refinement of the present disclosure, the subject's orientation may be also taken into account, such as a subject's movement direction, head orientation or gaze direction. Then, lighting devices may be turned on for example ahead of the subject in the direction in which the subject is moving. However, inaccuracies may then result, for example, because the subject is moving in one direction but may have a head orientation or gaze direction for looking sideways. Further, orientation estimation is hampered not only by a degree of unpredictability of movements (a subject may abruptly change a movement direction or increase speed, or look in another direction), but also by the inherent inaccuracy of available technology for estimating a subject's orientation. By taking a level of accuracy (reliability) of estimating a subject's position in terms of location and/or orientation into account, the present disclosure provides the possibility of enhanced energy saving at least in circumstances in which the level of accuracy of estimating the subject's position and/or orientation may be considered high. In particular, when a high level of accuracy is determined, a size of the partial area can be tailored to the needs of the subject. However, when a lower level of accuracy is determined, the illuminated area may be enlarged, by adding a complementary partial area.

In a further aspect of the present disclosure, a system exhibits features of the appended independent system claim.

Moreover, a computer program for carrying out a method described herein, as well as a non-transitory computer readable storage-medium storing the computer program may be provided. A computer program may, for example, be downloaded by or uploaded to an existing device or be stored upon manufacturing of these systems.

A non-transitory computer-readable storage medium stores at least one software code portion, the software code portion, when executed or processed by a computer, being configured to perform executable operations for controlling a plurality of lighting devices to render light effects while an audiovisual output system generates audiovisual output.

In a preferred embodiment, the complementary partial area extends along at least a portion of a periphery of the partial area.

Additionally or alternatively, the method may comprise: controlling the complementary selection of lighting devices in the complementary partial area at a reduced illumination intensity relative to the selection of lighting devices in the partial area.

Additionally or alternatively, the method may further comprise: estimating a subject's direction in the environment from a group comprising at least: a movement direction; a head orientation and a gaze direction of the subject and combinations thereof; and determining the level of accuracy depending on the estimated subject's direction. In such an embodiment, controlling the selection of lighting devices to illuminate the partial area, based on the estimated position and/or orientation of the subject within the area, may be further based on the estimated subject's direction. In such an embodiment, the method may additionally comprise controlling lighting devices in a portion of the partial area behind the subject, relative to the subject's direction, at a reduced illumination intensity relative to lighting devices in the partial area in front of the subject. Additionally or alternatively such an embodiment of the method may comprise controlling lighting devices in a portion of the complementary partial area behind the subject, relative to the subject's direction, at a reduced illumination intensity relative to lighting devices in the complementary partial area in front of the subject.

Additionally or alternatively, the determined level of accuracy may be based on a degree of confidence that the estimated position and/or orientation of the subject is correct. From an alternative viewpoint: the degree of confidence (being a probability) may be based on a determined level of accuracy or accuracies of position and/or orientation. Determining a confidence may involve more and other aspects than determining an accuracy. For example: determining a confidence level may include analyzing the behavior/activity of a subject (person) over a recent period of time. By considering a recent period of time, it is further also possible to take historic data into account. For example, the method and corresponding system may assume a high degree of correctness, to set a low lighting level in response thereto. However, the subject may disagree and override, for example by using a button or control switch to increase illumination. This can form a learning function to adjust a threshold (for this user/situation). Further, in case a person is exercising, the confidence level will be relatively low, while if a person is doing desk work behind a computer screen, the confidence will be relatively high.

Additionally or alternatively, the method may comprise: individually controlling each of the lighting devices in the partial area and, depending on the determined level of accuracy of the estimated position and/or orientation of the subject, in the complementary partial area, additionally based on a location thereof relative to the estimated position and/or orientation of the subject.

Additionally or alternatively, controlling lighting devices in the partial area and, depending on the determined level of accuracy of the estimated position and/or orientation of the subject, in the complementary partial area may be based on a comparison of the determined level of accuracy with at least one threshold. In such an embodiment, the method may, if the determined level of accuracy is above the threshold, comprise: reducing illumination intensity of at least some of the lighting devices in at least the complementary partial area.

Additionally or alternatively, the plurality of lighting devices may comprise lighting devices emitting melanopic light mainly in a horizontal direction, wherein determining the level of accuracy is based on the effectiveness of the melanopic lighting devices relative to the estimated position and/or orientation of the subject.

Additionally or alternatively, the method may further comprise: obtaining a layout of the environment, wherein the layout comprises information on at least one or more than one item in a group at least comprising: presence and/or location and/or orientation of furniture, active computing equipment, and the like; and determining the level of accuracy taking the layout into account.

### BRIEF DESCRIPTION OF THE DRAWINGS

These and other aspects of the invention are apparent from and will be further elucidated, by way of non-limiting examples, with reference to the appended drawings, in which:
Fig. 1 exemplifies an at least approximately perspective view of an environment to be at least partially illuminated for a subject;
Fig. 2 exemplifies a top-down view in the environment of Fig. 1;

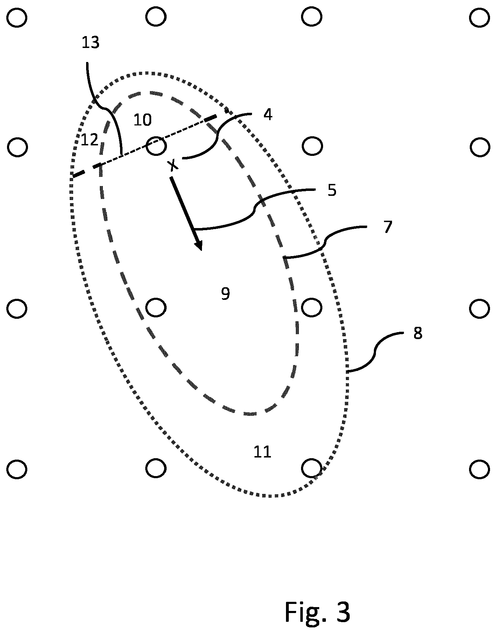

Fig. 3 exemplifies a similar top-down view as Fig. 2 for a high level of accuracy of estimating the position of the subject;
Fig. 4 exemplifies a similar top-down view as Fig. 2 for a low level of accuracy of estimating the position of the subject;
Figs. 5A, 5B exemplify another means of illuminating the environment based on position accuracy; and
Fig. 6 is a flow chart of a method according to the present disclosure.

Corresponding elements in the drawings may be denoted by the same or similar reference numerals.

### DETAILED DESCRIPTION OF EMBODIMENTS

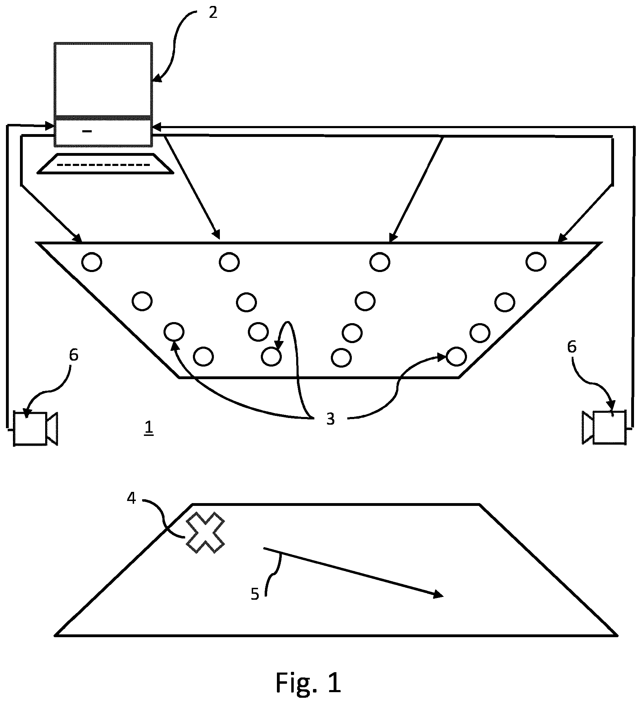

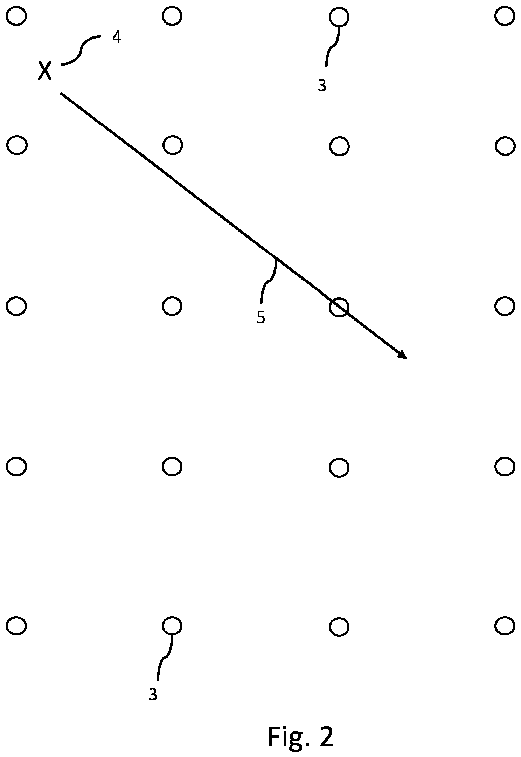

Fig. 1 and Fig. 2 show an environment 1, such as a distribution center, an office space, a train station, or the like, in a perspective and a top-down view, respectively. Illumination of the environment is controlled by a computer or processor 2. To this end, a plurality of lighting devices 3 is provided overhead, i.e. in or near a ceiling of the environment. However, other lighting devices may also be contemplated additionally or alternatively, for example lighting devices emitting melanopic light mainly in a horizontal direction. Lighting devices 3 are preferably individually controlled by processor 2, but may be driven in groups, subsets or arrays.

A subject 4, in particular a person or a user and schematically indicated by cross 4, may be present at a location in the environment at any given time, and illumination may then be desired. An objective is here to not switch on all lighting devices 3, as that would not be energy efficient. The subject 4 may move in the environment, for example in a direction of arrow 5. In environment 1, a positioning system is provided in the form of cameras 6 which provide captured images or video to processor 2. Other systems for estimating a position of subject 4 may be implemented, for example based on GPS, Wi-Fi and the like. However, although such alternative implementations may be more accurate than positions derived from video, these are less reliable when estimating for example a gaze direction.

Processor 2 estimates a location of subject 4 in environment 1 on the basis of signals from cameras 6, as well as - if applicable - a direction of subject 4. In particular for estimating a location of subject 4, accuracy is reduced when a distance between a camera and subject 4 is increased.

The direction of subject 4 may be a direction of movement or of gaze. Direction of movement may be estimated on the basis of recent movement and extrapolated. Direction of gaze may be a direction in which subject 4 is looking, and may be estimated based on a head orientation, a shoulder orientation or even eye ball orientation, to which US-9942966 relates.

Evidently, results of all methods of estimating position in terms of location and/or direction exhibit a degree of uncertainty. One approach may be to try to increase the certainty of results. However, the present disclosure is surprisingly directed at accepting that a level of accuracy may be less than desired, at least in some circumstances. With reference to the remarks above about distance between camera 6 and subject 4, a result of estimating the location of subject 4 may be less accurate at a large distance, and more accurate at shorter distance. Further, for estimating direction, in particular a gaze direction, and equating that to a reasonably simply detectable direction of movement, this inherently doesn't allow for the subject 4 looking sideways. Evidently, it is possible to quantify such levels of accuracy to be taken into account.

The objective is to turn on a selection from the plurality of lighting devices 3 to illuminate a partial area of environment 1. The partial area should suffice for the subject, and at the same time be as small as possible to optimize energy saving. If a determined level of accuracy is high, the selection from the plurality of light sources to illuminate the partial area may be chosen for optimal energy saving, which would involve a smallest number of lighting devices 3 that would provide the subject 4 with minimal and at the same time sufficient illumination. This minimal number may be formed by a selection of lighting devices 3 within a minimum horizontal distance from the estimated location of subject 4. The horizontal minimum distance may be influenced by the height at which lighting devices are mounted. Suffice it here to state that a skilled person is capable of determining what criteria to apply in any specific environment to obtain a minimum set of lighting devices 3 to minimally and sufficiently illuminate the partial area relative to subject 4.

However, if a level of accuracy in a specific set of circumstances is low, for example less than a threshold, processor 2 increases the output of illumination, but only when accuracy is low, thus contributing to energy saving, in any case when illumination is minimized in case of a high level of accuracy. To this end, in case of a low level of accuracy, processor 2 may enlarge the effective illumination area, starting from the partial area and increase it with a complementary partial area. A number of lighting devices to be included in the combined (basic and complementary) selection thereby is increased, as well as a size of the resulting effective illumination area, which increases power consumption, but only when this is warranted on the basis of low accuracy. In the case of melanopic lighting devices, levels of accuracy could be based on information about effectiveness of the melanopic lighting devices relative to the estimated position X of subject 4.

The added complementary selection of lighting devices 3 may extend the effective illumination area from the basic partial area in all directions, wherein the complementary partial area extends along all of a periphery of the basic partial area. However, to minimize the additional illumination, the complementary partial area may extend over a portion of a periphery of the partial area. In particular when the estimated position of subject 4 also contains a directional component, the complementary partial area may extend the effective area only or mainly in an estimated direction and thus minimize additional illumination. The complementary selection of lighting devices in the complementary partial area can be controlled to generate a same level of illumination as lighting devices 3 in the basic partial area. However, these lighting devices may alternatively be controlled to provide a reduced illumination intensity relative to the selection of lighting devices in the basic partial area. This might entail a tradeoff: fewer lighting devices 3 at high illumination intensity may consume less or more energy than more lighting devices 3 at lower illumination intensity, in the complementary partial area, and an optimum is expected to be dependent on the prevailing circumstances in environment 1 as well as power consumption characteristics of the deployed lighting devices 3.

A direction of subject 4 in the environment can be estimated, based for example on at least of: a movement direction; a head orientation and a gaze direction of the subject and combinations thereof. For determining the level of accuracy, the estimated direction so estimated may also be taken into account. While above reference was made to a basis partial area and selection, it is noted here that the shape of a basic partial area can be adapted to such directional estimation, even if the determined level of accuracy is sufficiently high so as not to have to deploy any complementary lighting devices 3 in the complementary selection for illumination of any complementary partial area.

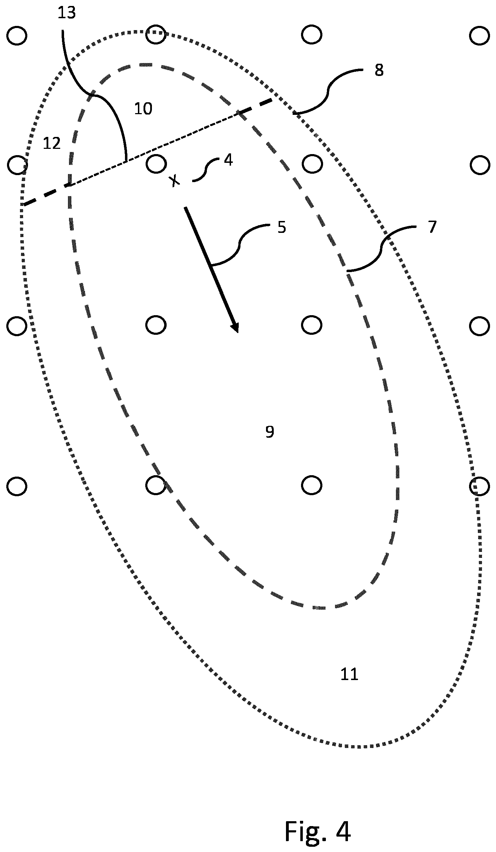

As an example, reference is made here to Fig.'s 3 and 4 with ellipsoid 7 enclosing partial area 9, 10 while the complementary partial area 11, 12 lies between ellipses 7 and 8. In an alternative interpretation, the basic partial area is formed by all areas 9 - 12 enclosed by outer ellipse 8, which are to be illuminated in case of a high level of accuracy of estimating the position X of subject 4, but lighting devices 3 in outer region 11, 12 of this basic partial area are controlled to generate a lower illumination intensity. For situations of a lower level of accuracy of estimating position X of subject 4, the configuration in Fig. 4 may be controlled by processor 2, in this alternative interpretation or embodiment, to achieve an enlarged total illumination area. However, the present disclosure proceeds on the assumption that the complementary partial area 11, 12 lies between ellipses 7 and 8.

When a direction is known (of movement, gaze or otherwise), albeit at a determinable level of accuracy, an estimated location X of subject 4 may be off-center relative to the ellipses 7, 8. Also if the basic partial area 9, 10 for high level accuracy were to be a circle instead of the shown ellipse 7, the knowledge about direction allows for a shift of such a circle parallel to the gaze, movement of other direction, whereby estimated position X of subject 4 is off-center of the circle.

Further, when estimating a direction of subject 4, lighting devices in a portion of the partial area behind subject 4, relative to the subject's direction, may be controlled to provide a reduced (or zero) illumination intensity relative to lighting devices in the partial area in front of subject 4. Likewise, and independent from or in conjunction with the partial area, lighting devices 3 in a portion of the complementary partial area behind subject 4, relative to the subject's direction, may be controlled to provide a reduced (or zero) illumination intensity relative to lighting devices 3 in the complementary partial area in front of subject 4. The notion 'in front of' and 'behind' often requires a reference, which could be a line 13 crossing through subject 4, preferably perpendicular or oblique relative to the estimated direction along arrow 5, for example through shoulders of subject 4 (if a person), or a line parallel thereto, or define a cone-shaped sub-area, with an apex at subject 4, etc.

The above disclosure is that a basic partial area 9 - 12 can have lighting devices 3 controlled to generate a reduced illumination intensity, even in a situation of a high level of accuracy. In particular, lighting devices 3 behind subject 4 or behind line 13 in regions 10, 12 may be dimmed or off, but also lighting devices 3 in a peripheral region 11 of the basic partial area, when comprising all areas 9 - 12 in the aforementioned alternative interpretation, may be dimmed or off.

If the method yields no direction information, illuminated partial areas are likely to be circular. However, when directional information is available, determining which lighting devices 3 to select even for a basic partial area may yield very interestingly shaped areas, for example ellipsoid, triangular or cone-shaped, truncated cones, and the like.

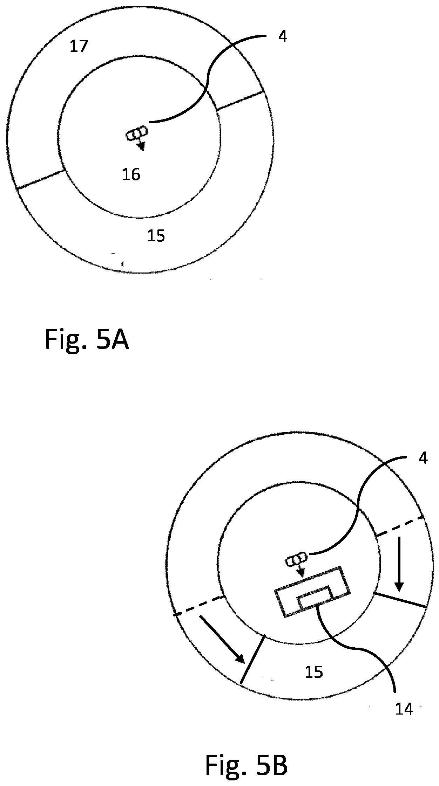

In Figs. 5A and 5B further aspects of the present disclosure are illustrated. There, information about the content of the environment is used to enhance a level of accuracy of estimating either the location or the direction or both. In Fig. 5A, subject 4 is located in the area of environment 1, facing in a very uncertain direction, indicated by a small arrow 5. As a consequence, lighting devices 3 in complementary partial area 15, extending widely in front of subject 4, are turned on with the same (or a slightly dimmed) illumination intensity as the lighting devices 3 in the basic partial area 16, while lighting devices 3 in the complementary partial area 17 behind subject 4 are turned off or are dimmed.

Lighting devices 3 in all other areas outside the outer circle can remain turned off.

Using information on the content of environment 1, it may be deduced from an estimated location of subject 4, that subject 4 is at a desk 14, where it is known that a computer is arranged on the desk, and it may even be known that this computer is being actively used. This knowledge about the desk and computer can be defined as a layout. Such input allows raising the level of accuracy, and reducing complementary partial area 15 in front of subject 4, as indicated with two arrows in Fig. 5B.

In addition, the system could be made "self learning", wherein the system may be able to detect the occurrence of situations when the estimation of the level of accuracy was not correct. For example, a situation when the lamps in the complementary partial area behind a person are in the off-state and the person suddenly turns around might result in a bad user experience. The system may can include a self-learning or machine-learning algorithm that adapts the level of accuracy to the detected successful and less successful (adaptations of the) light settings.

Such system can also include user settings. Such user settings might include a setting that determines the relative importance of reducing energy, which may result in a trade-off between energy saving and user experience.

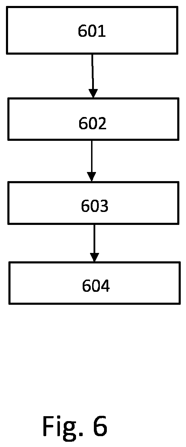

Fig. 6 shows a flow chart of steps performed in accordance with the method of the present disclosure, which may be performed by the processor 2 of Fig. 1.

In step 601, a position of a subject within the area of the environment is estimated.

In step 602, a selection of the plurality of lighting devices is controlled to illuminate a partial area, based on the estimated position of the subject within the area.

In step 603, a level of accuracy of the estimated position of the subject is determined.

Finally, in step 604, a complementary selection of the plurality of lighting devices is controlled to illuminate a complementary partial area, depending on the determined level of accuracy of the estimated position of the subject.

While (a) lighting method and system according to the present disclosure have been illustrated and described in detail in the appended drawing and foregoing description, such illustration and description are to be considered illustrative or exemplary and not restrictive; the scope of protection for the lighting method and system is not restricted to the specifically disclosed embodiments, but is defined in the appended independent claim(s). Any limitation on the scope other than to the features defined in the appended independent claim(s) is unjustified and unwarranted.

Other variations to the disclosed embodiments can be understood and effected by those skilled in the art in practicing the claimed invention, from a study of the drawings, the disclosure, and the appended claims. A single processor or other unit may fulfill the functions of several items recited in the claims. A computer program may be stored/distributed on a suitable medium, such as an optical storage medium or a solid-state medium supplied together with or as part of other hardware, but may also be distributed in other forms, such as via the Internet or other wired or wireless telecommunication systems. Any reference signs in the claims should not be construed as limiting the scope.

Various embodiments of the invention may be implemented as a program product for use with a computer system, where the program(s) of the program product define functions of the embodiments (including the methods described herein). In one embodiment, the program(s) can be contained on a variety of non-transitory computer-readable storage media, where, as used herein, the expression "non-transitory computer readable storage media" comprises all computer-readable media, with the sole exception being a transitory, propagating signal. In another embodiment, the program(s) can be contained on a variety of transitory computer-readable storage media. Illustrative computer-readable storage media include, but are not limited to: (i) non-writable storage media (e.g., read-only memory devices within a computer such as CD-ROM disks readable by a CD-ROM drive, ROM chips or any type of solid-state non-volatile semiconductor memory) on which information is permanently stored; and (ii) writable storage media (e.g., flash memory, floppy disks within a diskette drive or hard-disk drive or any type of solid-state random-access semiconductor memory) on which alterable information is stored. The computer program may be run on the processor described herein.

The terminology used herein is for the purpose of describing particular embodiments only and is not intended to be limiting of the invention. As used herein, the singular forms "a," "an," and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, elements, components, and/or groups thereof.

The corresponding structures, materials, acts, and equivalents of all means or step plus function elements in the claims below are intended to include any structure, material, or act for performing the function in combination with other claimed elements as specifically claimed. The description of embodiments of the present invention has been presented for purposes of illustration, but is not intended to be exhaustive or limited to the implementations in the form disclosed. Many modifications and variations will be apparent to those of ordinary skill in the art without departing from the scope of the present invention. The embodiments were chosen and described in order to best explain the principles and some practical applications of the present invention, and to enable others of ordinary skill in the art to understand the present invention for various embodiments with various modifications as are suited to the particular use contemplated.

## Claims

1. A method of illuminating an environment, where the environment covers an area in which a plurality of lighting devices are dispersed and arranged at predetermined positions, with the method comprising:
- estimating a position and/or orientation of a subject within the area;
- controlling a selection of the plurality of lighting devices to illuminate a partial area, based on the estimated position and/or orientation of the subject within the area;
the method **characterised by** comprising:
- determining a level of accuracy of the estimated position and/or orientation of the subject; and
- controlling a complementary selection of the plurality of lighting devices to illuminate a complementary partial area, depending on the determined level of accuracy of the estimated position and/or orientation of the subject.

2. The method as claimed in claim 1, wherein the complementary partial area extends along at least a portion of a periphery of the partial area.

3. The method as claimed in claim 1 or 2, comprising: controlling the complementary selection of lighting devices in the complementary partial area at a reduced illumination intensity relative to the selection of lighting devices in the partial area.

4. The method as claimed in claim 1, 2 or 3, further comprising:
- estimating a subject's direction in the environment from a group comprising at least: a movement direction; a head orientation and a gaze direction of the subject and combinations thereof; and
- determining the level of accuracy depending on the estimated subject's direction.

5. The method as claimed in claim 4, wherein controlling the selection of lighting devices to illuminate the partial area, based on the estimated position and/or orientation of the subject within the area, is further based on the estimated subject's direction.

6. The method as claimed in claim 4 or 5, comprising controlling lighting devices in a portion of the partial area behind the subject, relative to the subject's direction, at a reduced illumination intensity relative to lighting devices in the partial area in front of the subject.

7. The method as claimed in claim 4, 5 or 6, comprising controlling lighting devices in a portion of the complementary partial area behind the subject, relative to the subject's direction, at a reduced illumination intensity relative to lighting devices in the complementary partial area in front of the subject.

8. The method as claimed in any one of the preceding claims, wherein the determined level of accuracy is based on a degree of confidence that the estimated position and/or orientation of the subject is correct.

9. The method as claimed in any of the preceding claims, comprising: individually controlling each of the lighting devices in the partial area and, depending on the determined level of accuracy of the estimated position and/or orientation of the subject, in the complementary partial area, additionally based on a location thereof relative to the estimated position and/or orientation of the subject.

10. The method as claimed in any of the preceding claims, wherein controlling lighting devices in the partial area and, depending on the determined level of accuracy of the estimated position and/or orientation of the subject, in the complementary partial area is based on a comparison of the determined level of accuracy with at least one threshold.

11. The method as claimed in claim 10, comprising: if the determined level of accuracy is above the threshold, reducing illumination intensity of at least some of the lighting devices in the partial area.

12. The method as claimed in any of the preceding claims, wherein the plurality of lighting devices comprises lighting devices emitting melanopic light mainly in a horizontal direction, wherein determining the level of accuracy is based on effectiveness of the melanopic lighting devices relative to the estimated position and/or orientation of the subject.

13. The method as claimed in any of the preceding claims, further comprising:
- obtaining a layout of the environment, wherein the layout comprises information on at least one or more than one item in a group at least comprising: presence of furniture, locations and/or orientations of pieces of furniture, active computing equipment, and the like; and
- determining the level of accuracy on the basis of the layout.

14. A computer program product for a computing device, the computer program product comprising computer program code to perform the method of any of the preceding claims, when the computer program product is run on a processing unit of the computing device.

15. A system configured to at least partly illuminate an environment, where the environment covers an area with a plurality of lighting devices dispersed over the area of the environment at predetermined positions, wherein the system comprises at least one processor configured to:
- estimate a position and/or orientation of a subject within the area;
- control a selection of the plurality of lighting devices to illuminate a partial area, based on the estimated position and/or orientation of the subject within the area;
**characterised in that** the at least one processor is configured to:
- determine a level of accuracy of the estimated position and/or orientation of the subject;
- control a complementary selection of the plurality of lighting devices to illuminate a complementary partial area, depending on the determined level of accuracy of the estimated position and/or orientation of the subject.

## Patentansprüche

1. Verfahren zum Ausleuchten einer Umgebung, wobei die Umgebung einen Bereich abdeckt, in dem eine Vielzahl von Beleuchtungsvorrichtungen verteilt und an vorbestimmten Lagen angeordnet sind, das Verfahren umfassend:
- Schätzen einer Lage und/oder Ausrichtung eines Subjekts innerhalb des Bereichs;
- Steuern einer Auswahl der Vielzahl von Beleuchtungsvorrichtungen zum Ausleuchten eines Teilbereichs, basierend auf der geschätzten Lage und/oder Ausrichtung des Subjekts innerhalb des Bereichs;
wobei das Verfahren **dadurch gekennzeichnet ist, dass** es umfasst:
- Bestimmen eines Genauigkeitsniveaus der geschätzten Lage und/oder Ausrichtung des Subjekts; und
- Steuern einer komplementären Auswahl der Vielzahl von Beleuchtungsvorrichtungen, um einen komplementären Teilbereich auszuleuchten, abhängig von dem bestimmten Genauigkeitsniveau der geschätzten Lage und/oder Ausrichtung des Subjekts.

2. Verfahren nach Anspruch 1, wobei sich der komplementäre Teilbereich entlang mindestens eines Abschnitts einer Peripherie des Teilbereichs erstreckt.

3. Verfahren nach Anspruch 1 oder 2, umfassend: Steuern der komplementären Auswahl von Beleuchtungsvorrichtungen in dem komplementären Teilbereich mit einer reduzierten Ausleuchtungsintensität relativ zu der Auswahl von Beleuchtungsvorrichtungen in dem Teilbereich.

4. Verfahren nach Anspruch 1, 2 oder 3, ferner umfassend:
- Schätzen einer Richtung eines Subjekts in der Umgebung aus einer Gruppe, umfassend mindestens: eine Bewegungsrichtung; eine Kopfausrichtung und eine Blickrichtung des Subjekts und Kombinationen davon; und
- Bestimmen des Genauigkeitsniveaus in Abhängigkeit von der geschätzten Richtung des Subjekts.

5. Verfahren nach Anspruch 4, wobei das Steuern der Auswahl von Beleuchtungsvorrichtungen, um den Teilbereich auszuleuchten, basierend auf der geschätzten Lage und/oder Ausrichtung des Subjekts innerhalb des Bereichs, ferner auf der geschätzten Richtung des Subjekts basiert.

6. Verfahren nach Anspruch 4 oder 5, umfassend das Steuern von Beleuchtungsvorrichtungen in einem Abschnitt des Teilbereichs hinter dem Subjekt, relativ zu der Richtung des Subjekts, mit einer reduzierten Ausleuchtungsintensität relativ zu Beleuchtungsvorrichtungen in dem Teilbereich vor dem Subjekt.

7. Verfahren nach Anspruch 4, 5 oder 6, umfassend das Steuern von Beleuchtungsvorrichtungen in einem Abschnitt des komplementären Teilbereichs hinter dem Subjekt, relativ zu der Richtung des Subjekts, mit einer reduzierten Ausleuchtungsintensität relativ zu Beleuchtungsvorrichtungen in dem komplementären Teilbereich vor dem Subjekt.

8. Verfahren nach einem der vorstehenden Ansprüche, wobei das bestimmte Genauigkeitsniveau auf einem Vertrauensgrad basiert, dass die geschätzte Lage und/oder Ausrichtung des Subjekts korrekt ist.

9. Verfahren nach einem der vorstehenden Ansprüche, umfassend:
individuelles Steuern jeder der Beleuchtungsvorrichtungen in dem Teilbereich und, abhängig von dem bestimmten Genauigkeitsniveau der geschätzten Lage und/oder Ausrichtung des Subjekts, in dem komplementären Teilbereich, zusätzlich basierend auf einer Position davon relativ zu der geschätzten Lage und/oder Ausrichtung des Subjekts.

10. Verfahren nach einem der vorstehenden Ansprüche, wobei das Steuern von Beleuchtungsvorrichtungen in dem Teilbereich und, abhängig von dem bestimmten Genauigkeitsniveau der geschätzten Lage und/oder Ausrichtung des Subjekts, in dem komplementären Teilbereich auf einem Vergleich des bestimmten Genauigkeitsniveaus mit mindestens einem Schwellenwert basiert.

11. Verfahren nach Anspruch 10, umfassend: falls das bestimmte Genauigkeitsniveau über dem Schwellenwert liegt, Reduzieren der Ausleuchtungsintensität von mindestens einigen der Beleuchtungsvorrichtungen in dem Teilbereich.

12. Verfahren nach einem der vorstehenden Ansprüche, wobei die Vielzahl von Beleuchtungsvorrichtungen Beleuchtungsvorrichtungen umfasst, die melanopisches Licht hauptsächlich in horizontaler Richtung emittieren, wobei das Bestimmen des Genauigkeitsniveaus auf der Wirksamkeit der melanopischen Beleuchtungsvorrichtungen relativ zu der geschätzten Lage und/oder Ausrichtung des Subjekts basiert.

13. Verfahren nach einem der vorstehenden Ansprüche, ferner umfassend:
- Erhalten eines Layouts der Umgebung, wobei das Layout Informationen zu mindestens einem oder mehr als einem Element in einer Gruppe umfasst, mindestens umfassend: Vorhandensein von Möbeln, Positionen und/oder Ausrichtungen von Möbelstücken, aktive Computerausrüstung und dergleichen; und
- Bestimmen des Genauigkeitsniveaus auf Basis des Layouts.

14. Computerprogrammprodukt für eine Rechenvorrichtung, das Computerprogrammprodukt umfassend Computerprogrammcode, um das Verfahren nach einem der vorstehenden Ansprüche durchzuführen, wenn das Computerprogrammprodukt auf einer Verarbeitungseinheit der Rechenvorrichtung laufen gelassen wird.

15. System, das konfiguriert ist, um eine Umgebung mindestens teilweise auszuleuchten, wobei die Umgebung einen Bereich mit einer Vielzahl von Beleuchtungsvorrichtungen abdeckt, die über den Bereich der Umgebung an vorbestimmten Lagen verteilt sind, wobei das System mindestens einen Prozessor umfasst, der konfiguriert ist zum:
- Schätzen einer Lage und/oder Ausrichtung eines Subjekts innerhalb des Bereichs;
- Steuern einer Auswahl der Vielzahl von Beleuchtungsvorrichtungen, um einen Teilbereich auszuleuchten, basierend auf der geschätzten Lage und/oder Ausrichtung des Subjekts innerhalb des Bereichs;
**dadurch gekennzeichnet, dass** der mindestens eine Prozessor konfiguriert ist zum:
- Bestimmen eines Genauigkeitsniveaus der geschätzten Lage und/oder Ausrichtung des Subjekts;
- Steuern einer komplementären Auswahl der Vielzahl von Beleuchtungsvorrichtungen, um einen komplementären Teilbereich auszuleuchten, abhängig von dem bestimmten Genauigkeitsniveau der geschätzten Lage und/oder Ausrichtung des Subjekts.

## Revendications

1. Procédé d'éclairement d'un environnement, où l'environnement couvre une zone dans laquelle une pluralité de dispositifs d'éclairage sont dispersés et agencés à des positions prédéterminées, le procédé comprenant :
- l'estimation d'une position et/ou d'une orientation d'un sujet à l'intérieur de la zone ;
- la commande d'une sélection de la pluralité de dispositifs d'éclairage pour éclairer une zone partielle, sur la base de la position et/ou de l'orientation estimées du sujet dans la zone ;
le procédé étant **caractérisé en ce qu'**il comprend :
- la détermination d'un niveau de précision de la position et/ou de l'orientation estimées du sujet ; et
- la commande d'une sélection complémentaire de la pluralité de dispositifs d'éclairage pour éclairer une zone partielle complémentaire, en fonction du niveau de précision déterminé de la position et/ou de l'orientation estimées du sujet.

2. Procédé selon la revendication 1, dans lequel la zone partielle complémentaire s'étend le long d'au moins une partie d'une périphérie de la zone partielle.

3. Procédé selon la revendication 1 ou 2, comprenant : la commande de la sélection complémentaire de dispositifs d'éclairage dans la zone partielle complémentaire à une intensité d'éclairement réduite par rapport à la sélection de dispositifs d'éclairage dans la zone partielle.

4. Procédé selon la revendication 1, 2 ou 3, comprenant en outre :
- l'estimation d'une direction du sujet dans l'environnement parmi un groupe comprenant au moins : une direction de mouvement ; une orientation de la tête et une direction du regard du sujet et des combinaisons de celles-ci ; et
- la détermination du niveau de précision en fonction de la direction estimée du sujet.

5. Procédé selon la revendication 4, dans lequel la commande de la sélection de dispositifs d'éclairage pour éclairer la zone partielle, en fonction de la position et/ou de l'orientation estimées du sujet dans la zone, est en outre basée sur la direction estimée du sujet.

6. Procédé selon la revendication 4 ou 5, comprenant la commande de dispositifs d'éclairage dans une partie de la zone partielle derrière le sujet, par rapport à la direction du sujet, à une intensité d'éclairement réduite par rapport à des dispositifs d'éclairage dans la zone partielle devant le sujet.

7. Procédé selon la revendication 4, 5 ou 6, comprenant la commande de dispositifs d'éclairage dans une partie de la zone partielle complémentaire derrière le sujet, par rapport à la direction du sujet, à une intensité d'éclairement réduite par rapport à des dispositifs d'éclairage dans la zone partielle complémentaire devant le sujet.

8. Procédé selon l'une quelconque des revendications précédentes, dans lequel le niveau de précision déterminé est basé sur un degré de confiance dans le fait que la position et/ou l'orientation estimées du sujet sont correctes.

9. Procédé selon l'une quelconque des revendications précédentes, comprenant :
la commande individuelle de chacun des dispositifs d'éclairage dans la zone partielle et, en fonction du niveau de précision déterminé de la position et/ou de l'orientation estimées du sujet, dans la zone partielle complémentaire, sur la base en outre d'une localisation de celui-ci par rapport à la position et/ou à l'orientation estimées du sujet.

10. Procédé selon l'une quelconque des revendications précédentes, dans lequel la commande de dispositifs d'éclairage dans la zone partielle et, en fonction du niveau de précision déterminé de la position et/et/ou de l'orientation estimées du sujet, dans la zone partielle complémentaire est basée sur une comparaison du niveau de précision déterminé avec au moins un seuil.

11. Procédé selon la revendication 10, comprenant : si le niveau de précision déterminé est supérieur au seuil, la réduction de l'intensité d'éclairement d'au moins certains des dispositifs d'éclairage dans la zone partielle.

12. Procédé selon l'une quelconque des revendications précédentes, dans lequel la pluralité de dispositifs d'éclairage comprend des dispositifs d'éclairage émettant une lumière mélanopique principalement dans une direction horizontale, dans lequel la détermination du niveau de précision est basée sur l'efficacité des dispositifs d'éclairage mélanopique par rapport à la position et/ou à l'orientation estimées du sujet.

13. Procédé selon l'une quelconque des revendications précédentes, comprenant en outre :
- l'obtention d'une disposition de l'environnement, dans lequel la disposition comprend des informations sur au moins un ou plusieurs éléments dans un groupe comprenant au moins : la présence de mobilier, des emplacements et/ou des orientations de meubles, des équipements informatiques actifs, et similaires ; et
- la détermination du niveau de précision sur la base de la disposition.

14. Produit programme informatique pour un dispositif informatique, le produit programme informatique comprenant un code de programme informatique pour mettre en œuvre le procédé selon l'une quelconque des revendications précédentes lorsque le produit programme informatique est exécuté sur une unité de traitement du dispositif informatique.

15. Système configuré pour éclairer au moins partiellement un environnement, dans lequel l'environnement couvre une zone avec une pluralité de dispositifs d'éclairage dispersés sur la zone de l'environnement à des positions prédéterminées, dans lequel le système comprend au moins un processeur configuré pour :
- estimer une position et/ou une orientation d'un sujet dans la zone ;
- commander une sélection de la pluralité de dispositifs d'éclairage pour éclairer une zone partielle, sur la base de la position et/ou de l'orientation estimées du sujet dans la zone ;
**caractérisé en ce que** l'au moins un processeur est configuré pour :
- déterminer un niveau de précision de la position et/ou de l'orientation estimées du sujet ;
- commander une sélection complémentaire de la pluralité de dispositifs d'éclairage pour éclairer une zone partielle complémentaire, en fonction du niveau de précision déterminé de la position et/ou de l'orientation estimées du sujet.
